# EUROPEAN PATENT SPECIFICATION

(11) **EP 4 439 780 B1**
(45) Date of publication and mention of the grant of the patent: **14.01.2026**
(21) Application number: 24165991.1
(22) Date of filing: 25.03.2024
(51) Int. Cl.: H01M 10/42, H01M 10/48, H01M 50/204, H01M 50/244, H01M 50/258, H01M 50/262, H01M 50/284, H01M 50/291, H01M 50/296, H01M 50/505, H02J 7/00

(54) **BATTERY MODULE ASSEMBLY**
BATTERIEMODULBAUGRUPPE
ENSEMBLE MODULE DE BATTERIE

(30) Priority: 26.03.2023 KR 20230039397; 04.10.2023 KR 20230131907
(43) Date of publication of application: 02.10.2024
(73) Proprietor: Samsung SDI Co., Ltd., Yongin-si, Gyeonggi-do 17084 (KR)
(72) Inventor: WOO, Beomjun, 17084 Yongin-si (KR); MOON, Soodeok, 17084 Yongin-si (KR); JEON, Jeehoon, 17084 Yongin-si (KR)
(74) Representative: Marks & Clerk LLP

(56) References cited:
- EP-A1- 4 131 607
- US-A1- 2018 108 891
- US-A1- 2019 033 385

## Description

### BACKGROUND

### 1. Field

Aspects of one or more embodiments relate to a battery module assembly.

### 2. Description of the Related Art

Secondary batteries are generally configured to be rechargeable and dischargeable multiple times, and thus, they may be repeatedly used. Secondary batteries may be used as energy sources of devices such as mobile devices, electric vehicles, hybrid electric vehicles, electric bicycles, and uninterruptible power supplies. Single-cell secondary batteries or multi-cell secondary batteries each including a plurality of cells connected to each other in one unit are used according to the types of external devices using the secondary batteries.

The above information disclosed in this Background section is only for enhancement of understanding of the background and therefore the information discussed in this Background section does not necessarily constitute prior art.

### SUMMARY

Aspects of one or more embodiments include a battery module assembly that may be used to adjust a capacity and weight of a battery in accordance with a situation and use due to a configuration capable of easily attaching/detaching a part of a battery module in accordance with the situation and use.

Additional aspects will be set forth in part in the description which follows and, in part, will be apparent from the description, or may be learned by practice of the presented embodiments of the present disclosure.

The present invention provides a battery module assembly as defined in claim 1 ass appended hereto. The battery module assembly is mounted on a frame and electrically connected to an external device through first and second output terminals, the battery module assembly comprising a plurality of battery modules mounted on a lower portion of the frame, each of the plurality of battery modules extending in a first direction, which is a longitudinal direction, and being arranged in a second direction crossing the first direction, and a control circuit configured to control an electrical connection between each of the plurality of battery modules and each of the first and second output terminals, wherein the plurality of battery modules comprise a first group of battery modules mounted on the lower portion of the frame and electrically connected to each other and a second group of battery modules separably mounted on the lower portion of the frame and electrically connected to each other, the second group of battery modules are connected in parallel to the first group of battery modules, and are detachable from the frame in a third direction perpendicular to the first direction and the second direction. The second group of battery modules are mounted on the frame so as to be independently separated from the first group of battery modules such that the first group of battery modules remain mounted on the frame and the second group of battery modules are detachable from the frame.

The second group of battery modules are mounted on the frame so as to be independently separated from the first group of battery modules such that the first group of battery modules can remain mounted on the frame when the second group of battery modules are detached from the frame, and power supplied to the outside by the battery module assembly is able to be maintained by the first group of battery modules even during detachment of the second group of battery modules.

In some embodiments the control circuit comprises a first control circuit configured to electrically control a connection between a positive terminal of the first group of battery modules and a first output terminal, a second control circuit configured to electrically control a connection between a negative terminal of the first group of battery modules and a second output terminal, a third control circuit configured to electrically control a connection between a positive terminal of the second group of battery modules and the first output terminal, and a fourth control circuit configured to electrically control a connection between a negative terminal of the second group of battery modules and the second output terminal.

According to some embodiments, the first direction may be a direction connecting the front and the rear of the frame.

According to some embodiments, the third direction may be a direction from an upper portion to a lower portion of the frame.

According to some embodiments, the plurality of battery modules may be arranged symmetrically with respect to the first direction within the frame.

According to some embodiments, the first group of battery modules may be spaced apart from each other by a certain distance with the second group of battery modules located therebetween.

According to some embodiments, the second group of battery modules may be at a central position in the lower portion of the frame, and the first group of battery modules may be spaced apart from each other by a certain distance in the second direction at an edge position in the lower portion of the frame. The second group of battery modules may be located therebetween.

According to some embodiments, the battery module assembly may further include a bus bar electrically connected to a positive terminal or a negative terminal of each of the plurality of battery modules, the bus bar may include first to fourth bus bars, the first bus bar may be electrically connected to the first control circuit, the second bus bar may be electrically connected to the second control circuit, the third bus bar may be electrically connected to the third control circuit, and the fourth bus bar may be electrically connected to the fourth control circuit.

According to some embodiments, one of the positive terminal and the negative terminal of each of the plurality of battery modules may be at one end of the frame in a front direction in the first (.e.g. longitudinal) direction in each of the plurality of battery modules, and the other one of the positive terminal and the negative terminal may be at the other end of the frame in a rear direction in the first direction in each of the plurality of battery modules.

According to some embodiments, terminals at one end of the frame in the front direction in each of the plurality of battery modules may be formed side by side in the second direction, terminals at the other end of the frame in the rear direction in each of the plurality of battery modules may be formed side by side in the second direction, the bus bar may include fifth and sixth bus bars, the fifth bus bar may electrically connect the positive terminal to the negative terminal of the first group of battery modules among the terminals formed at the other end of the frame in the rear direction, and the sixth bus bar may electrically connect the positive terminal and the negative terminal of the second group of battery modules among the terminals formed at the other end of the frame in the rear direction.

According to some embodiments, the battery module assembly may further include a battery management unit accommodated inside or on the frame and configured to selectively open and close the first to fourth control circuits according to a state of charge (SOC) of each of the first group of battery modules and the second group of battery modules.

According to some embodiments, the battery management unit may have a charge control state if the first output terminal and the second output terminal each supply electrical energy to at least one of the plurality of battery modules, and may have a discharge control state if at least one of the plurality of battery modules supplies electrical energy to the outside through the first output terminal and the second output terminal.

According to some embodiments, in the charge control state, the battery management unit may open the first control circuit and the second control circuit and short the third control circuit and the fourth control circuit if the SOC of the first group of battery modules is greater than the SOC of the second group of battery modules, and open the third control circuit and the fourth control circuit and short the first control circuit and the second control circuit if the SOC of the second group of battery modules is greater than the SOC of the first group of battery modules.

According to some embodiments, in the discharge control state, the battery management unit may open the first control circuit and the second control circuit and short the third control circuit and the fourth control circuit if the SOC of the first group of battery modules is greater than the SOC of the second group of battery modules, and open the third control circuit and the fourth control circuit and short the first control circuit and the second control circuit if the SOC of the second group of battery modules is greater than the SOC of the first group of battery modules.

According to some embodiments, the battery management unit may open and close the first to fourth control circuits by wirelessly communicating with the first group of battery modules and the second group of battery modules.

At least some of the above and other features of the invention are set out in the claims.

### BRIEF DESCRIPTION OF DRAWINGS

The above and other aspects, features, and characteristics of certain embodiments of the present disclosure will be more apparent from the following description taken in conjunction with the accompanying drawings, in which:
FIG. 1 is a plan view illustrating a battery module assembly according to some embodiments;
FIG. 2 is a front perspective view illustrating the battery module assembly according to some embodiments;
FIG. 3 is a perspective view illustrating the battery module assembly in which a front frame is omitted, according to some embodiments;
FIG. 4 is a rear perspective view illustrating the battery module assembly according to some embodiments;
FIG. 5 is a perspective view illustrating the battery module assembly in which a rear frame is omitted, according to some embodiments;
FIG. 6 is an exploded perspective view of separating a second group of battery modules according to some embodiments;
FIG. 7 is a rear view of the battery module assembly from which a protective cover is removed, according to some embodiments;
FIG. 8 is a bottom perspective view of the battery module assembly from which the protective cover is removed, according to some embodiments;
FIG. 9 is an exploded perspective view of the battery module assembly from which the protective cover is removed, according to some embodiments;
FIG. 10 is an exploded perspective view of the battery module assembly viewed from bottom from which the protective cover is removed to explain a connection between a battery module and a bus bar, according to some embodiments;
FIG. 11 is an exploded perspective view for explaining the bus bar and a connection terminal according to some embodiments;
FIG. 12 is a flowchart illustrating a method, performed by a battery management unit, of controlling charging of the battery module according to some embodiments;
FIG. 13 is a schematic diagram for explaining control circuits according to some embodiments;
FIG. 14 is a schematic diagram for explaining a first charge control state according to some embodiments;
FIG. 15 is a schematic diagram for explaining a second charge control state according to some embodiments;
FIG. 16 is a flowchart illustrating a method, performed by the battery management unit, of controlling discharging of the battery module according to some embodiments;
FIG. 17 is a schematic diagram for explaining a first state of discharge control according to some embodiments; and
FIG. 18 is a schematic diagram for explaining a second state of discharge control according to some embodiments.

### DETAILED DESCRIPTION

Reference will now be made in more detail to aspects of some embodiments, which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a battery module assembly 1 will be described according to some embodiments with reference to the accompanying drawings.

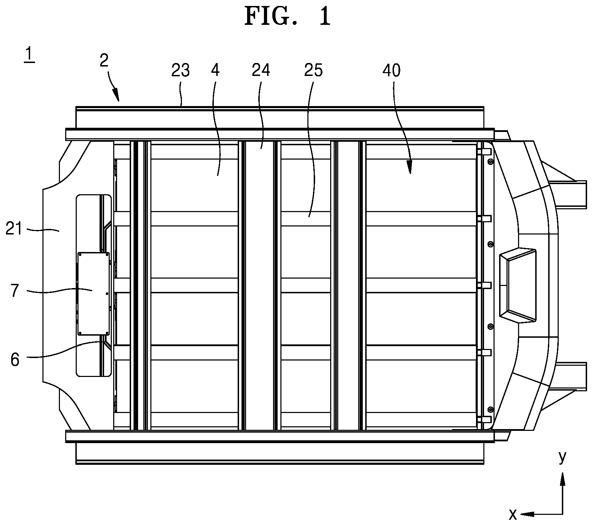

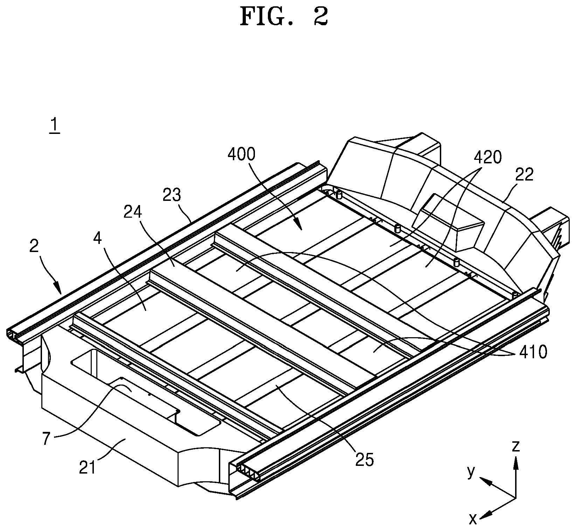

FIG. 1 is a plan view illustrating the battery module assembly 1 according to some embodiments. FIG. 2 is a front perspective view illustrating the battery module assembly 1 according to some embodiments.

Referring to FIGS. 1 and 2, according to some embodiments, the battery module assembly 1 may include a frame 2, a battery module 4, and a battery management unit 7.

According to some embodiments, the frame 2 may accommodate and protect the battery module 4. The frame 2 may be configured to accommodate the battery module 4. The frame 2 may accommodate and protect the battery management unit 7. The frame 2 may have a front direction and a rear direction. A direction from the rear to the front of the frame 2 may be an x-axis direction. A direction connecting the front and the rear of the frame 2 may be a first direction x. The frame 2 may have an upper direction and a lower direction. A direction of the frame 2 from a lower side to an upper side of the frame 2 may be a z-axis direction. The battery module 4 may be assembled to the frame 2 by moving from the lower direction to the upper direction of the frame 2. However, the directions regarding the frame 2 are not limited to the above description. The battery module assembly 1 may not include the frame 2. For example, the battery module assembly 1 may be mounted on the frame 2.

The frame 2 according to some embodiments may include a front frame 21, a rear frame 22, a side frame 23, and a rib 24. The front frame 21 may protect a front surface of the frame 2 in the front of the frame 2. The rear frame 22 may protect a rear surface of the frame 2 in a side surface of the frame 2. The side frame 23 may protect both sides of the frame 2. The side frame 23 may extend in the x-axis direction. The rib 24 may support the frame 2 on the inside of the frame 2. The rib 24 may support the side frame 23. The rib 24 may extend in the y-axis direction and be connected to the side frame 23. The ribs 24 may be located above the battery module 4. The frame 2 may include a plurality of ribs 24. However, the function and structure of the frame 2 are not limited to the above description.

The frame 2 may form the exterior of the battery module assembly 1. The frame 2 may support the battery module assembly 1. The frame 2 may be a car body frame 2 forming a framework of a car. The frame 2 may be a chassis of a car. However, the function and use of the frame 2 are not limited to the above description. For example, the frame 2 may directly or indirectly cover the exterior of the battery module assembly 1.

The battery module 4 according to some embodiments may store electrical energy. The battery module 4 may be accommodated in a lower portion of the frame 2. The battery module 4 may be positioned in and fixed to the lower portion of the frame 2. The battery module 4 may be attachable to and detachable from the frame 2. The battery module 4 may be coupled to the frame 2 from a lower direction to an upper direction. The battery module 4 may be separated from the frame 2 in the lower direction. However, a method of coupling or separating the battery module 4 to or from the frame 2 is not limited to the above description.

The battery module 4 may extend in a longitudinal direction. The battery module 4 may extend in the first direction x. The battery module 4 may extend by using the first direction x as the longitudinal direction. The first direction x may be a direction connecting the front and the rear of the frame 2. The first direction x may be the x-axis direction. However, a relationship between the first direction x and the frame 2 and a shape of the battery module 4 are not limited to the above description. For example, a direction in which the battery module 4 extends may be perpendicular to the direction connecting the front and the rear of the frame 2.

The battery module assembly 1 may include a plurality of battery modules 4. The plurality of battery modules 4 may be arranged side by side. Each of the plurality of battery modules 4 may be arranged in a second direction y. The second direction y may cross the first direction x. The second direction y may form a certain angle with the first direction x. The angle formed by the second direction y and the first direction x may be approximately a right angle. The second direction y may be a y-axis direction. However, methods of arranging the plurality of battery modules 4 and a specific definition of the second direction y are not limited to the above description.

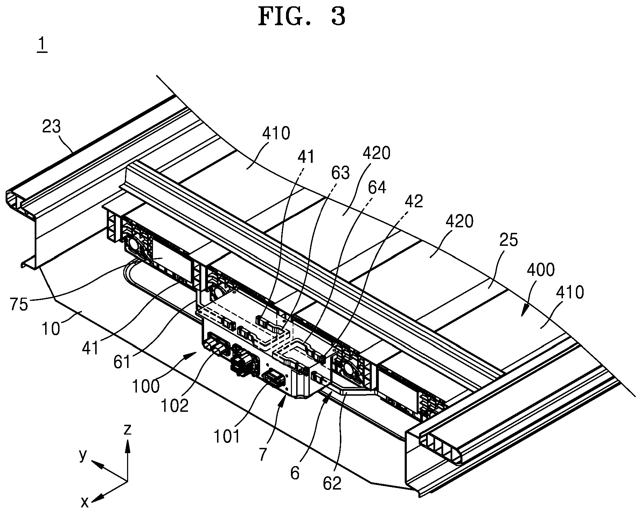

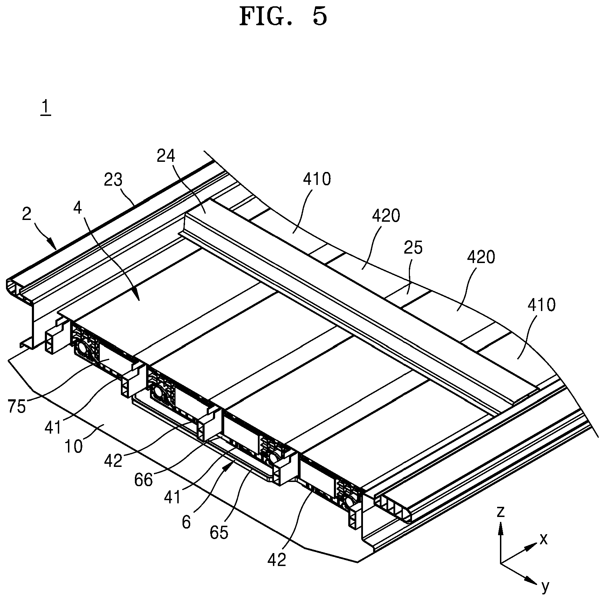

The battery module 4 according to some embodiments may include a terminal configured to exchange electrical energy. The battery module 4 may include a positive terminal 41 (see FIGS. 3 and 5) and a negative terminal 42 (see FIGS. 3 and 5). One of the positive terminal 41 and the negative terminal 42 of the battery module 4 may be formed at one end of the battery module 4 in the front direction of the frame 2 in the first direction x. The other one of the positive terminal 41 and the negative terminal 42 of the battery module 4 may be formed at the other end of the battery module 4 in the rear direction of the frame 2 in the first direction x. The positive terminal 41 and negative terminal 42 of the battery module 4 may be respectively located at both ends of the frame 2 in the front direction and the rear direction. However, an arrangement of terminals of the battery module 4 is not limited to the above description. For example, the positive terminal 41 and the negative terminal 42 included in the battery module 4 may be located adjacent to each other on one end of the battery module 4.

The frame 2 according to some embodiments may include a support fixing portion 25. The support fixing portion 25 may function to support and fix the battery module 4. The support fixing portion 25 may extend in the longitudinal direction in which the battery module 4 extends. The support fixing portion 25 may extend in the first direction x. A middle part of the support fixing portion 25 may be supported by the ribs 24. The support fixing portion 25 may support each of the battery modules 4 on both sides. The support fixing portion 25 may support each of the battery modules 4 on both sides in the second direction y. The support fixing portion 25 may extend in the longitudinal direction in which the battery module 4 extends. The frame 2 may include a plurality of support fixing portions 25. The plurality of support fixing portions 25 may be arranged side by side at a certain distance in the second direction y. The support fixing portions 25 may be located between the plurality of battery modules 4 arranged in the second direction y. The battery modules 4 may be located between the plurality of support fixing portions 25 arranged in the second direction y. However, an arrangement of the battery modules 4 and the support fixing portions 25 is not limited to the above description.

The plurality of battery modules 4 according to some embodiments may form a battery module group 400. The battery module group 400 may be a cluster formed by the plurality of battery modules 4 having similar purposes or functions. The battery module group 400 may include a first group of battery modules 410 and a second group of battery modules 420. However, a method of categorizing or classifying the battery module group 400 is not limited to the above description.

The first group of battery modules 410 according to some embodiments may be accommodated in the lower portion of the frame 2. The first group of battery modules 410 may be electrically connected to each other. The plurality of battery modules 4 constituting the first group of battery modules 410 may be connected to each other in series. However, arrangement positions and a method of electrically connecting the first group of battery modules 410 are not limited to the above description.

The second group of battery modules 420 according to some embodiments may be attachably and detachably accommodated in the lower portion of the frame 2. The second group of battery modules 420 may be electrically connected to each other. The plurality of battery modules 4 constituting the second group of battery modules 420 may be connected to each other in series. However, arrangement positions and a method of electrically connecting the second group of battery modules 420 are not limited to the above description.

The second group of battery modules 420 are connected to the first group of battery modules 410 in parallel. For example, even if the second group of battery modules 420 are electrically connected to the first group of battery modules 410, a voltage provided to a circuit to which the first group of battery modules 410 are electrically connected is not changed..

FIG. 3 is a perspective view of the battery module assembly 1 in which the front frame 21 is omitted according to some embodiments.

Referring to FIGS. 2 and 3, the frame 2 according to some embodiments may accommodate the battery management unit 7. The front frame 21 may accommodate the battery management unit 7. However, an arrangement position of the battery management unit 7 is not limited to the above description.

The battery module assembly 1 according to some embodiments may include a first output terminal 101 and a second output terminal 102. The first output terminal 101 and the second output terminal 102 may be electrically connected to the plurality of battery modules 4. The first output terminal 101 and the second output terminal 102 may provide electrical output to the outside of the battery module assembly 1. The first output terminal 101 and the second output terminal 102 may receive electrical output from the outside of the battery module assembly 1. The first output terminal 101 and the second output terminal 102 may be passages for exchanging external electrical energy with the battery module assembly 1. However, a method of electrically connecting the battery modules 4 to the first output terminal 101 and the second output terminal 102 is not limited to a direct connection and may also include an indirect connection. Functions and roles of the first output terminal 101 and the second output terminal 102 are not limited to the above description.

The first output terminal 101 and the second output terminal 102 according to some embodiments may be electrically connected to an external device. The battery module assembly 1 may be mounted on the frame 2 and electrically connected to an external device through the first output terminal 101 and the second output terminal 102. The external device may be a device located outside the battery module 4. The external device may be accommodated in the frame 2. The external device may be mounted on the frame 2. The external device may be a power-operated device. For example, the external device may be an electrically-powered device such as an electric motor. The external device may be a device that supplies power to the battery module assembly 1. For example, the external device may be a power supply. However, a role and type of the external device are not limited to the above description.

The battery management unit 7 according to some embodiments may control electrical operations of the plurality of battery modules 4. The battery management unit 7 may include the first output terminal 101 and the second output terminal 102. The battery management unit 7 may control an electrical connection between the plurality of battery modules 4 and the first output terminal 101 and the second output terminal 102. The battery management unit 7 may control an electrical connection between the first group of battery modules 410 and the first output terminal 101 and the second output terminal 102. The battery management unit 7 may control an electrical connection between the second group of battery modules 420 and the first output terminal 101 and the second output terminal 102. However, arrangement positions of the first output terminal 101 and the second output terminal 102 and the role of the battery management unit 7 are not limited to the above description.

The first output terminal 101 according to some embodiments may be a terminal to which the positive terminal 41 of the battery module 4 is connected. The second output terminal 102 may be a terminal to which the negative terminal 42 of the battery module 4 is connected. However, a method of electrically connecting the first output terminal 101 to the second output terminal 102 is not limited to the above description.

The battery module assembly 1 according to some embodiments may include a bus bar 6. The bus bar 6 may serve to transmit electrical energy. The bus bar 6 may electrically connect the battery module 4 to the battery management unit 7. The battery module assembly 1 may include a plurality of bus bars 6. The bus bars 6 may electrically connect the plurality of battery modules 4 to each other. The bus bars 6 may connect the plurality of battery modules 4 in series or in parallel. The bus bar 6 may be connected to an end of the battery module 4. The bus bar 6 may be electrically connected to the positive terminal 41 or the negative terminal 42 of each of the plurality of battery modules 4.

The bus bar 6 may be electrically connected to the positive terminal 41 or the negative terminal 42 of each of the first group of battery modules 410. The bus bar 6 may be electrically connected to the positive terminal 41 or the negative terminal 42 of each of the second group of battery modules 420. The bus bar 6 may electrically connect the positive terminal 41 of each of the plurality of battery modules 4 to the first output terminal 101. The bus bar 6 may electrically connect the negative terminal 42 of each of the plurality of battery modules 4 to the second output terminal 102. However, a method in which the bus bar 6 connects a terminal of the battery module 4 to the first output terminal 101 and the second output terminal 102 is not limited to the above description.

The bus bars 6 according to some embodiments may include first to fourth bus bars 61 to 64. The first to fourth bus bars 61 to 64 may be located in the front direction of the frame 2. The first bus bar 61 may electrically connect the positive terminal 41 of the first group of battery modules 410 to the first output terminal 101. The second bus bar 62 may electrically connect the negative terminal 42 of the first group of battery modules 410 to the second output terminal 102. The third bus bar 63 may electrically connect the positive terminal 41 of the second group of battery modules 420 to the first output terminal 101. The fourth bus bar 64 may electrically connect the negative terminal 42 of the second group of battery modules 420 to the second output terminal 102. However, a method in which the bus bar 6 is electrically connected to the negative terminal 42 and the positive terminal 41 of the battery module 4, the first output terminal 101, and the second output terminal 102 is not limited to a direct connection and may also include an indirect connection. An arrangement and functions of the first to fourth bus bars 61 to 64 are not limited to the above description.

The first bus bar 61 and the second bus bar 62 according to some embodiments may form an electrical connection between the first output terminal 101 and the second output terminal 102 and the first group of battery modules 410. The third bus bar 63 and the fourth bus bar 64 may form an electrical connection between the first output terminal 101 and the second output terminal 102 and the second group of battery modules 420. The first group of battery modules 410 and the second group of battery modules 420 may each have a parallel connection with the first output terminal 101 and the second output terminal 102. However, a connection structure of the bus bar 6 and an electrical connection relationship between the first group of battery modules 410 and the second group of battery modules 420 are not limited to the above description.

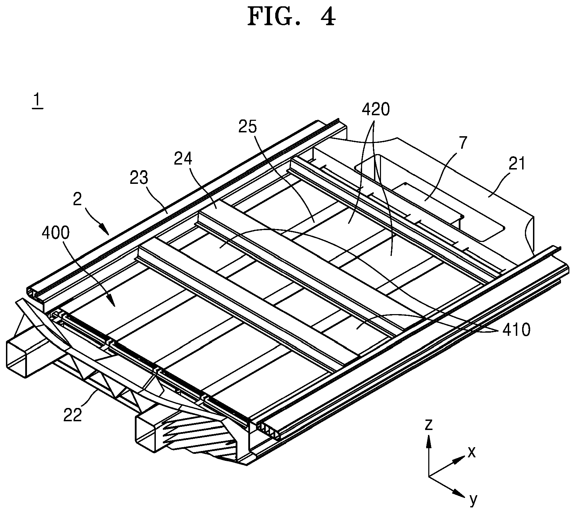

FIG. 4 is a rear perspective view illustrating the battery module assembly 1 according to some embodiments. FIG. 5 is a perspective view illustrating the battery module assembly 1 in which the rear frame 22 is omitted according to some embodiments.

Referring to FIGS. 3 to 5, terminals may be formed at one end of the frame 2 in a front direction in each of the plurality of battery modules 4 according to some embodiments. Terminals may be formed at the other end of the frame 2 in a rear direction in each of the plurality of battery modules 4. The terminals formed at one end of the frame 2 in the front direction in each of the plurality of battery modules 4 may be arranged side by side in the second direction y. The terminals formed at the other end of the frame 2 in the rear direction in each of the plurality of battery modules 4 may be arranged side by side in the second direction y. However, an arrangement of the terminals of the plurality of battery modules 4 is not limited to the above description.

The first group of battery modules 410 according to some embodiments may have the positive electrode terminal 41 and the negative electrode terminal 42 arranged side by side in the second direction y in the rear direction of the frame 2. The second group of battery modules 420 may have the positive terminal 41 and the negative terminal 42 arranged side by side in the second direction y in the rear direction of the frame 2. However, an arrangement of the positive terminal 41 and the negative terminal 42 of each of the first group of battery modules 410 and the second group of battery modules 420 is not limited to the above description.

The bus bars 6 according to some embodiments may include a fifth bus bar 65 and a sixth bus bar 66. The fifth bus bar 65 and the sixth bus bar 66 may be arranged in the rear direction of the frame 2. The fifth bus bar 65 may electrically connect the positive terminal 41 and the negative terminal 42 of the first group of battery modules 410 to each other. The fifth bus bar 65 may electrically connect the positive terminal 41 and the negative terminal 42 of the first group of battery modules 410 to each other among the terminals formed at the other end of the frame 2 in the rear direction. The sixth bus bar 66 may electrically connect the positive terminal 41 and the negative terminal 42 of the second group of battery modules 420 to each other. The sixth bus bar 66 may electrically connect the positive terminal 41 and the negative terminal 42 of the second group of battery modules 420 to each other among the terminals formed at the other end of the frame 2 in the rear direction. However, an arrangement and functions of the fifth bus bar 65 and the sixth bus bar 66 are not limited to the above description.

The battery modules 4 constituting the first group of battery modules 410 may have a serial direction through the fifth bus bar 65 according to some embodiments. The battery modules 4 constituting the second group of battery modules 420 may have a serial direction through the sixth bus bar 66. However, a connection structure of the bus bar 6 and an electrical connection relationship of the battery modules 4 constituting the first group of battery modules 410 and the second group of battery modules 420 are not limited to the above description.

The battery module assembly 1 according to some embodiments may include a protective cover 10. The protective cover 10 may function to protect a lower portion of the battery module 4. The protective cover 10 may function to protect a lower portion of the frame 2. The protective cover 10 may be fixed to the lower portion of the frame 2. The protective cover 10 may be arranged across the lower portion of the battery module 4. However, a function and role of the protective cover 10 are not limited to the above description.

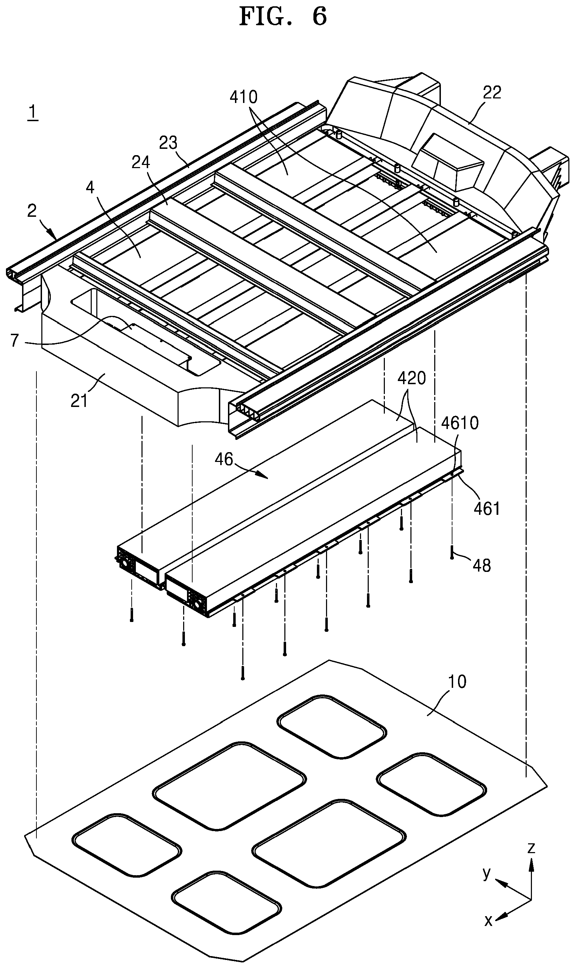

FIG. 6 is an exploded perspective view of separating the second group of battery modules 420 according to some embodiments.

Referring to FIG. 6, the battery module assembly 1 according to the present invention attaches and detaches the second group of battery modules 420. The battery module assembly 1 may detach the second group of battery modules 420 in a vertical direction. The battery module assembly 1 detaches the second group of battery modules 420 in a third direction perpendicular to the first direction x and the second direction y. The battery module assembly 1 may detach the second group of battery modules 420 in a direction from an upper portion to a lower portion of the frame 2. However, a direction of detaching the second group of battery modules 420 from the battery module assembly 1 is not limited to the above description.

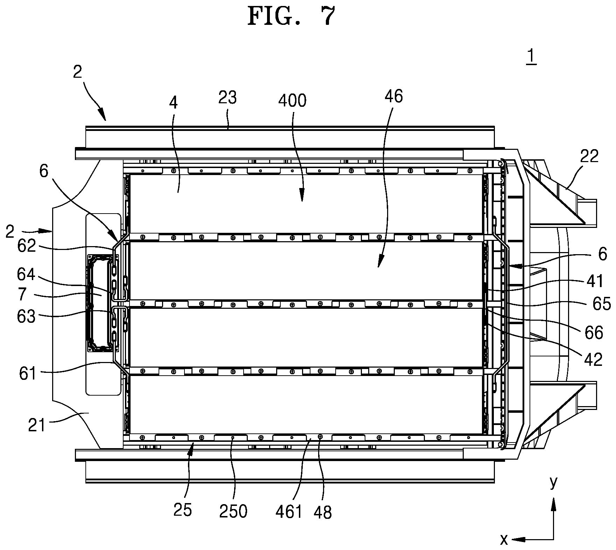

FIG. 7 is a rear view of the battery module assembly 1 from which the protective cover 10 is removed according to some embodiments.

Referring to FIGS. 6 and 7, the battery module 4 according to some embodiments may include a fastening flange 461. The fastening flange 461 may function to fix the battery module 4 to a lower portion of the frame 2. The fastening flange 461 may protrude from an end of the battery module 4. The fastening flange 461 may protrude from the end of the battery module 4 adjacent to the support fixing portion 25 in a direction toward the support fixing portion 25. The fastening flange 461 may protrude from the end of the battery module 4 in a direction that overlaps the support fixing portion 25 in an up and down direction. The fastening flange 461 may protrude from a side surface of the battery module 4 in the second direction y. However, a configuration and a function of the fastening flange 461 are not limited to the above description.

The battery module 4 may include a plurality of fastening flanges 461 according to some embodiments. The plurality of fastening flanges 461 may be formed in the first direction x. The plurality of fastening flanges 461may be formed at certain distances in the first direction x. The fastening flanges 461 may be independently located on both sides of the battery module 4. The fastening flanges 461 may be located on both sides of the battery module 4 in the second direction y. Both sides of the battery module 4 may be where the battery module 4 is opposite to the support fixing portion 25. The plurality of fastening flanges 461 may be formed on both sides of the battery module 4 at certain distances in the first direction x. However, functions and an arrangement of the fastening flanges 461 are not limited to the above description.

The battery module assembly 1 according to some embodiments may include a fixing member 48 fixing the battery module 4 to the frame 2. The fixing member 48 may fix the battery module 4 to the frame 2. The fixing member 48 may fix the battery module 4 to the support fixing portion 25. The fixing member 48 may be inserted into an insertion hole 4610 of the fastening flange 461. The fixing member 48 may be fixed to the fastening flange 461. The fixing member 48 may be fastened in the direction from the lower portion to the upper portion of the frame 2. However, a method of fixing the battery module 4 to the frame 2 is not limited thereto.

The support fixing portion 25 of the frame 2 according to some embodiments may include a fastening hole 250. The fastening hole 250 may accommodate and fix the fixing member 48. The fixing member 48 may be inserted into and fixed to the fastening hole 250. The fixing member 48 may be inserted into the fastening hole 250 of the support fixing portion 25 in the direction from the lower portion to the upper portion of the frame 2. The fastening hole 250 may be concentric with the insertion hole 4610 of the fastening flange 461. The fixing member 48 may be inserted into the insertion hole 4610 of the fastening flange 461 and fixed to the fastening hole 250 of the support fixing portion 25. The fixing member 48 may penetrate the fastening flange 461 in the lower portion and be accommodated in the support fixing portion 25. The fixing member 48 may include, but is not limited to, a screw, a bolt, a rivet, etc.

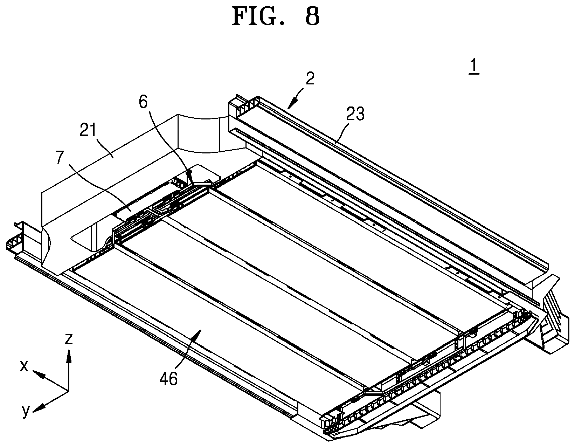

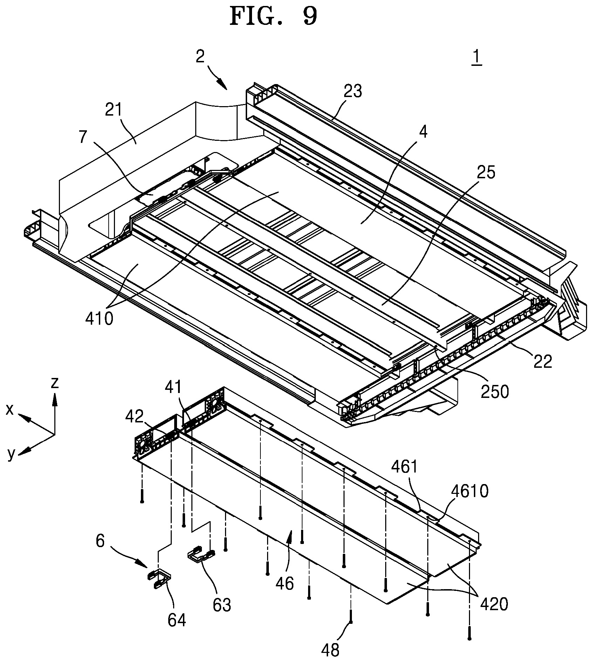

FIG. 8 is a bottom perspective view of the battery module assembly 1 from which the protective cover 10 is removed according to some embodiments. FIG. 9 is an exploded perspective view of the battery module assembly 1 from which the protective cover 10 is removed according to some embodiments.

Referring to FIGS. 8 and 9, the battery module assembly 1 according to some embodiments may detach the second group of battery modules 420 by removing the fixing member 48. The battery module assembly 1 may detach the second group of battery modules 420 by removing the fixing member 48 adhered to the fastening flange 461 of the second group of battery modules 420. However, a method of detaching the second group of battery modules 420 is not limited to the above description.

The battery module assembly 1 maintains the first group of battery modules 410 mounted on the frame 2 and may detach the second group of battery modules 420 from the frame 2. The second group of battery modules 420 is configured to be independently separated from the first group of battery modules 410 on the frame 2. If the second group of battery modules 420 is detached from the frame 2 while the first group of battery modules 410 are mounted on the frame 2, the second group of battery modules 420 may be easy to detach from the frame 2. If the second group of battery modules 420 are detached from the frame 2 while the first group of battery modules 410 are mounted on the frame 2, power supplied to the outside by the battery module assembly 1 is maintained even during detachment. However, the advantage of detaching the second group of battery modules 420 from the frame 2 while the first group of battery modules 410 are mounted on the frame 2 is not limited to the above description.

If the second group of battery modules 420 according to some embodiments is detached, the weight of the battery module assembly 1 may be lightened. Even if the second group of battery modules 420 are detached, an electrical output provided by the battery module assembly 1 may be the same as if the second group of battery modules 420 are mounted. Even if the second group of battery modules 420 are detached, the electrical output provided by the battery module assembly 1 may not be reduced. However, the advantage of detaching the second group of battery modules 420 is not limited to the above description.

The battery module assembly 1 according to some embodiments may be mounted again after detaching the second group of battery modules 420. The second group of battery modules 420 may be mounted on the frame 2 through the fixing member 48. If the second group of battery modules 420 is mounted on the battery module assembly 1, the total amount of electrical energy stored in the battery module assembly 1 may increase. However, the advantage of mounting the second group of battery modules 420 is not limited to the above description.

The battery module assembly 1 according to some embodiments may determine whether to attach or detach the second group of battery modules 420 according to purpose of use. The battery module assembly 1 may determine attachment and detachment of the second group of battery modules 420 by considering the weight and electrical energy storage capacity. For example, if the battery module assembly 1 is used as a vehicle battery, the second group of battery modules 420 may be detached to reduce the weight of the battery module assembly 1 during city driving. For example, if the battery module assembly 1 is used as a vehicle battery, the second group of battery modules 420 may be mounted to increase the electric energy storage capacity of the battery module assembly 1 during long distance driving. However, a decision-making method for attaching and detaching the second group of battery modules 420 is not limited to the above description.

Referring to FIGS. 1 to 9, the plurality of battery modules 4 included in the battery module assembly 1 according to some embodiments may be arranged symmetrically with respect to the first direction x within the frame 2. If the plurality of battery modules 4 are arranged symmetrically with respect to the first direction x within the frame 2, the center of gravity of the battery module assembly 1 may be uniform in the second direction y. However, an arrangement of the plurality of battery modules 4 is not limited to the above description.

According to some embodiments, the first group of battery modules 410 may be spaced apart from each other at a certain distance with the second group of battery modules 420 located therebetween. If the first group of battery modules 410 are spaced apart from each other at a certain distance with the second group of battery modules 420 located therebetween, the moment of inertia of the battery module assembly 1 in a third direction may not be large. If the first group of battery modules 410 are spaced apart from each other at a certain distance with the second group of battery modules 420 located therebetween, even if the second group of battery modules 420 is detached, a yawing motion of the battery module assembly 1 in the third direction may not be excessive. If the first group of battery modules 410 are spaced apart from each other at a certain distance with the second group of battery modules 420 located therebetween, the moment of inertia of the battery module assembly 1 in the second direction y may not be large. If the first group of battery modules 410 are spaced apart from each other at a certain distance with the second group of battery modules 420 located therebetween, even if the second group of battery modules 420 is detached, a rolling motion of the battery module assembly 1 in the second direction y may not be excessive.

The second group of battery modules 420 according to some embodiments may be located at a central position in a lower portion of the frame 2, and the first group of battery modules 410 may be located at an edge position in the lower portion of the frame 2 in the second direction y. If the first group of battery modules 410 are located at the edge position in the lower portion of the frame 2 in the second direction y, even if the second group of battery modules 420 are detached, the yawing motion of the battery module assembly 1 in the third direction may not be excessive. If the first group of battery modules 410 are located at the edge position in the lower portion of the frame 2 in the second direction y, the moment of inertia of the battery module assembly 1 in the second direction y may not be large. If the first group of battery modules 410 are located at the edge position in the lower portion of the frame 2 in the second direction y, even if the second group of battery modules 420 are detached, the rolling motion of the battery module assembly 1 in the second direction y may not be excessive.

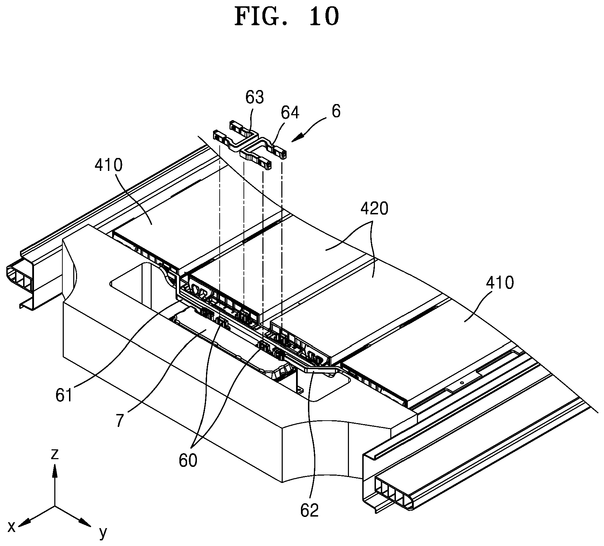

FIG. 10 is an exploded perspective view of the battery module assembly 1 viewed from bottom from which the protective cover 10 is removed to explain a connection between the battery module 4 and the bus bar 6 according to some embodiments.

Referring to FIGS. 3, 5, 9, and 10, the bus bar 6 according to some embodiments may be attached to and detached from the battery module 4 from a lower direction to an upper direction. The bus bar 6 may be a quick-connect bus bar 6 that may be quickly attached to and detached from a terminal of the battery module 4 or a bus bar accommodation portion 60 of the battery management unit 7. If the bus bar 6 is attached to and detached from the terminal of the battery module 4 or the bus bar accommodation portion 60 of the battery management unit 7, no additional member may be required. If the bus bar 6 is quickly attached to and detached from the terminal of the battery module 4 or the bus bar accommodation portion 60 of the battery management unit 7, the second group of battery modules 420 may be easily detached from the battery module assembly 1. If the bus bar 6 is quickly attached to and detached from the terminal of the battery module 4 or the bus bar accommodation portion 60 of the battery management unit 7, the second group of battery modules 420 may be easily again mounted on the battery module assembly 1. However, a specific method of attaching and detaching the bus bar 6 is not limited to the above description.

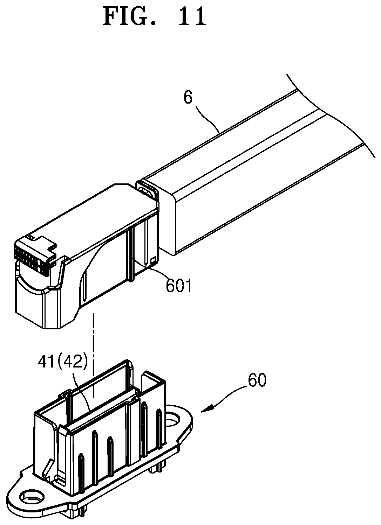

FIG. 11 is an exploded perspective view for explaining the bus bar 6 and a connection terminal according to some embodiments.

Referring to FIGS. 10 and 11, the connection terminal according to some embodiments may receive an end of the bus bar 6. The connection terminal may be electrically connected to the bus bar 6. The connection terminal may be a concept including all of the positive terminal 41, the negative terminal 42, and bus bar accommodation portion 60 of the battery module 4. The connection terminal may be located in the battery module 4 and/or the battery management unit 7. However, an arrangement and a function of the connection terminal are not limited to the above description.

The bus bar 6 may include a mounting protrusion 601 on a side surface of the end connected to the connection terminal. The bus bar 6 may include a plurality of mounting protrusions 601. The connection terminal may include an accommodation portion groove corresponding to the mounting protrusion 601. The connection terminal may include a plurality of accommodation portion grooves. The mounting protrusion 601 and the accommodation portion groove may guide a direction in which the bus bar 6 is connected. For example, the mounting protrusion 601 and the accommodation portion groove may guide a specific end of the bus bar 6 to be connected to a specific connection terminal. For example, the mounting protrusion 601 and the accommodation portion groove may function to indicate a specific connection terminal to which a specific end of the bus bar 6 is to be connected. However, functions and roles of the mounting protrusion 601 and the accommodation portion groove are not limited to the above description.

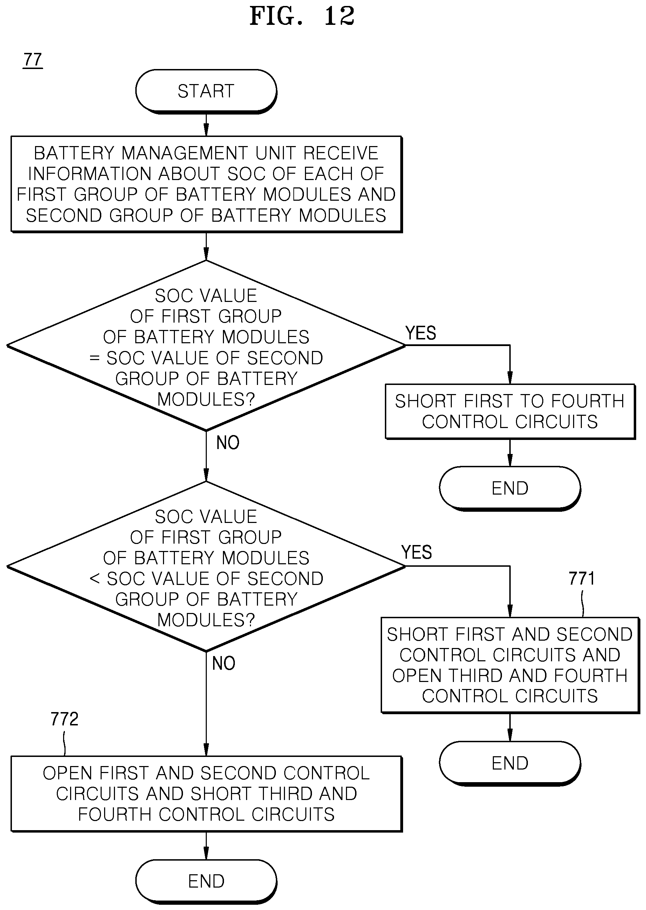

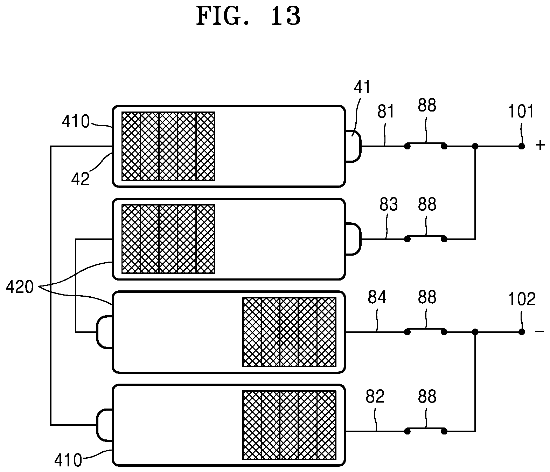

FIG. 12 is a flowchart illustrating a method, performed by the battery management unit 7, controlling the battery module 4 according to some embodiments. FIG. 13 is a schematic diagram for explaining first to fourth control circuits 81 to 84 according to some embodiments.

Referring to FIGS. 1, 3, 5, 12, and 13, the battery module assembly 1 according to some embodiments may include the first to fourth control circuits 81 to 84. The first control circuit 81 may electrically control a connection between the positive terminal 41 of the first group of battery modules 410 and the first output terminal 101. The second control circuit 82 may electrically control a connection between the negative terminal 42 of the first group of battery modules 410 and the second output terminal 102. The third control circuit 83 may electrically control a connection between the positive terminal 41 of the second group of battery modules 420 and the first output terminal 101. The fourth control circuit 84 may electrically control a connection between the negative terminal 42 of the second group of battery modules 420 and the second output terminal 102. However, functions of the first to fourth control circuits 81 to 84 are not limited to the above description.

The first bus bar 61 according to some embodiments may be electrically connected to the first control circuit 81. The second bus bar 62 may be electrically connected to the second control circuit 82. The third bus bar 63 may be electrically connected to the third control circuit 83. The fourth bus bar 64 may be electrically connected to the fourth control circuit 84. However, the electrical connection between the fourth bus bar 64 and a control circuit is not limited to the above description.

The first to fourth control circuits 81 to 84 according to some embodiments controlling the electrical connections between terminals of the battery module 4 and output terminals may mean controlling the electrical connection between the bus bar 6 and the battery module 4. The first to fourth control circuits 81 to 84 controlling the electrical connections between the terminals of the battery module 4 and the output terminals may mean controlling the electrical connections between the bus bar 6 and the output terminals. However, methods, performed by the first to fourth control circuits 81 to 84, of controlling the electrical connections are not limited to the above description.

The battery management unit 7 according to some embodiments may control a plurality of battery modules 4. The battery management unit 7 controlling the plurality of battery modules 4 may mean selecting a battery module to supply power from among the plurality of battery modules 4. The battery management unit 7 controlling the plurality of battery modules 4 may mean selecting a battery module to which power is to be supplied from among the plurality of battery modules 4. The battery management unit 7 may be electrically connected to the battery module 4. The battery management unit 7 may receive power from the battery module 4.

The battery management unit 7 according to some embodiments may selectively open the first to fourth control circuits 81 to 84. The battery management unit 7 may selectively short the first to fourth control circuits 81 to 84. The battery management unit 7 may selectively open and close the first to fourth control circuits 81 to 84. The battery management unit 7 selectively opening and closing the first to fourth control circuits 81 to 84 may mean selecting a battery module to supply power from among the plurality of battery modules 4. The battery management unit 7 selectively opening and closing the first to fourth control circuits 81 to 84 may mean selecting a battery module to which power is to be supplied from among the plurality of battery modules 4.

The battery management unit 7 may receive information about a state of charge (SOC) of each of the plurality of battery modules 4. The battery management unit 7 may receive information about an SOC of each of the first group of battery modules 410 and the second group of battery modules 420. The battery management unit 7 may selectively open and close the first to fourth control circuits 81 to 84 according to the SOC of each of the first group of battery modules 410 and the second group of battery modules 420.

The battery management unit 7 may wirelessly communicate with the plurality of battery modules 4. The battery module 4 may include a module control unit 75. The module control unit 75 may be a battery management module (BMM). The battery management unit 7 may be a battery management system (BMS). The battery management unit 7 may communicate with a module control unit 75 of the battery module 4. The battery management unit 7 and the module control unit 75 may communicate through a daisy chain method. However, a method, performed by the battery management unit 7, of communicating with the battery module 4 is not limited to the above description.

The battery management unit 7 may wirelessly communicate with the first group of battery modules 410 and the second group of battery modules 420. The battery management unit 7 may wirelessly receive the information about the SOC of each of the first group of battery modules 410 and the second group of battery modules 420. The battery management unit 7 may open and close the first to fourth control circuits 81 to 84 by wirelessly communicating with the first group of battery modules 410 and the second group of battery modules 420. If charging or discharging the plurality of battery modules 4, the battery management unit 7 may select a battery module to be charged or discharged by using the information about the SOC of each of the first group of battery modules 410 and the second group of battery modules 420.

The battery management unit 7 may wirelessly receive information about attachment and detachment of the second group of battery modules 420. If the second group of battery modules 420 are detached, the battery management unit 7 may determine that the second group of battery modules 420 are not electrically connected to the first output terminal 101 and the second output terminal 102. If the second group of battery modules 420 are detached, the battery management unit 7 may not operate a cooling passage for cooling the second group of battery modules 420.

Referring to FIGS. 12 and 13, the battery module assembly 1 according to some embodiments may have a charge control state 77. The charge control state 77 may be a state in which the battery management unit 7 controls charging of the plurality of battery modules 4. The charge control state 77 may be a state in which the battery management unit 7 controls charging between the first group of battery modules 410 and the second group of battery modules 420.

In order to properly manage the battery module group 400 according to some embodiments, the lifespan of the battery module 4 may be maintained long by adjusting an SOC of the battery module group 400 to prevent the first group of battery modules 410 and the second group of battery modules 420 from being overcharged.

The battery management unit 7 may compare an SOC value of the first group of battery modules 410 with an SOC value of the second group of battery modules 420. If the SOC value of the first group of battery modules 410 and the SOC value of the second group of battery modules 420 are the same, the battery management unit 7 may simultaneously charge the first group of battery modules 410 and the second group of battery modules 420 by shorting the first to fourth control circuits 81 to 84.

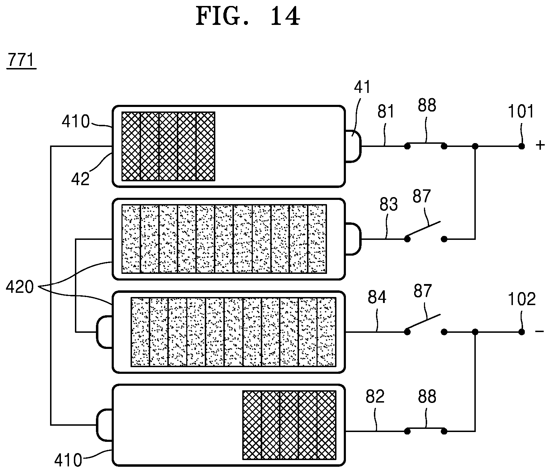

FIG. 14 is a schematic diagram for explaining a first charge control state 771 according to some embodiments.

Referring to FIGS. 8, 9, and 12 to 14, the battery module assembly 1 may have the first charge control state 771. If the second group of battery modules 420 according to some embodiments are mounted on the battery module assembly 1, an SOC of the first group of battery modules 410 and an SOC of the second group of battery modules 420 may be different from each other. The first charge control state 771 may be a state in which if the battery management unit 7 controls charging between the first group of battery modules 410 and the second group of battery modules 420, an SOC value of the first group of battery modules 410 is lower than an SOC value of the second group of battery modules 420. The battery management unit 7 may short the first control circuit 81 and the second control circuit 82 and open the third control circuit 83 and the fourth control circuit 84 in the first charge control state 771. In the first charge control state 771, the first control circuit 81 and the second control circuit 82 may be in a short state 88, and the third control circuit 83 and the fourth control circuit 84 may be in an open state 87. The battery management unit 7 may charge the first group of battery modules 410 with electrical energy without charging the second group of battery modules 420 in the first charge control state 771.

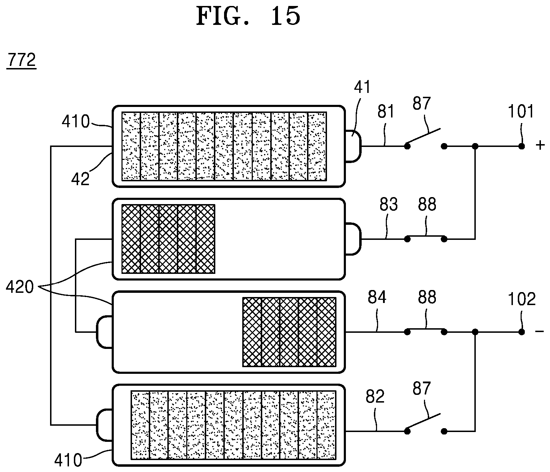

FIG. 15 is a schematic diagram illustrating a second charge control state 772 according to some embodiments.

Referring to FIGS. 8, 9, 12, and 15, the battery module assembly 1 may have the second charge control state 772. If the second group of battery modules 420 according to some embodiments are mounted on the battery module assembly 1, an SOC of the first group of battery modules 410 and an SOC of the second group of battery modules 420 may be different from each other. The second charge control state 772 may be a state in which if the battery management unit 7 controls charging between the first group of battery modules 410 and the second group of battery modules 420, an SOC value of the first group of battery modules 410 is greater than an SOC value of the second group of battery modules 420. The battery management unit 7 may open the first control circuit 81 and the second control circuit 82 and short the third control circuit 83 and the fourth control circuit 84 in the second charge control state 772. In the second charge control state 772, the first control circuit 81 and the second control circuit 82 may be in the open state 87, and the third control circuit 83 and the fourth control circuit 84 may be in the short state 88. The battery management unit 7 may charge the first group of battery modules 410 with electrical energy without charging the second group of battery modules 420 in the second charge control state 772.

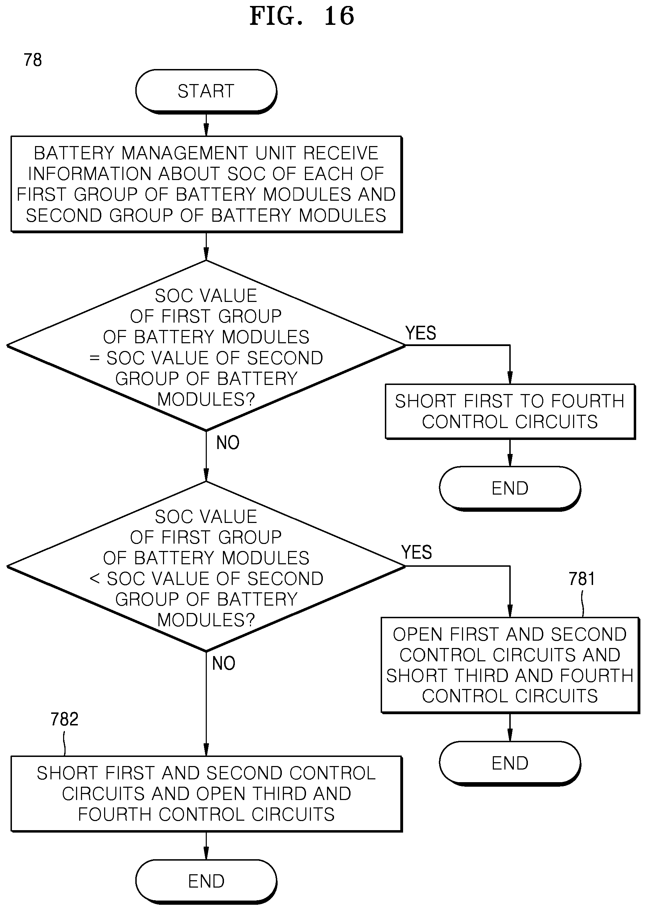

FIG. 16 is a flowchart illustrating a method, performed by the battery management unit 7, controlling discharging of the battery module 4 according to some embodiments.

Referring to FIGS. 13 and 16, the battery module assembly 1 according to some embodiments may have a discharge control state 78. The discharge control state 78 may be a state in which the battery management unit 7 controls discharging of each of the plurality of battery modules 4. The discharge control state 78 may be a state in which the battery management unit 7 controls discharging between the first group of battery modules 410 and the second group of battery modules 420.

In order to properly manage the battery module group 400 according to some embodiments, the lifespan of the battery module 4 may be maintained long by adjusting an SOC of the battery module group 400 to prevent the first group of battery modules 410 and the second group of battery modules 420 from being over-discharged.

The battery management unit 7 may compare an SOC value of the first group of battery modules 410 with an SOC value of the second group of battery modules 420. If the SOC value of the first group of battery modules 410 and the SOC value of the second group of battery modules 420 are the same, the battery management unit 7 may simultaneously discharge the first group of battery modules 410 and the second group of battery modules 420 by shorting the first to fourth control circuits 81 to 84.

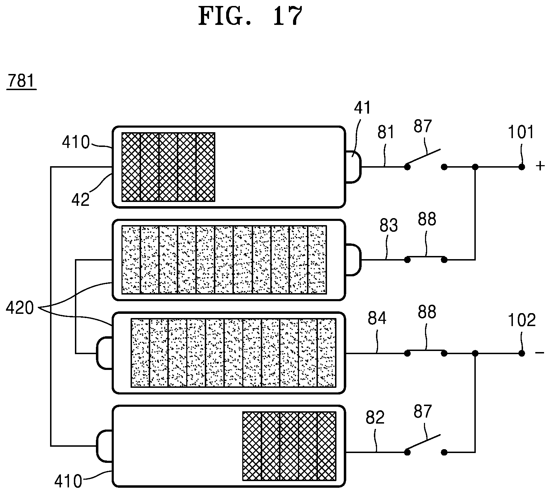

FIG. 17 is a schematic diagram illustrating a first discharge control state 781 according to some embodiments.

Referring to FIGS. 8, 9, 16, and 17, the battery module assembly 1 may have the first discharge control state 781. If the second group of battery modules 420 according to some embodiments are mounted on the battery module assembly 1, an SOC of the first group of battery modules 410 and an SOC of the second group of battery modules 420 may be different from each other. The first discharge control state 781 may be a state in which if the battery management unit 7 controls discharging between the first group of battery modules 410 and the second group of battery modules 420, an SOC value of the first group of battery modules 410 is lower than an SOC value of the second group of battery modules 420. The battery management unit 7 may open the first control circuit 81 and the fourth control circuit 84 and short the second control circuit 82 and the third control circuit 83 in the first discharge control state 781. In the first discharge control state 781, the first control circuit 81 and the fourth control circuit 84 may be in the open state 87, and the second control circuit 82 and the third control circuit 83 may be in the short state 88. The battery management unit 7 may discharge electrical energy from the second group of battery modules 410 without discharging the first group of battery modules 420 in the first discharge control state 781.

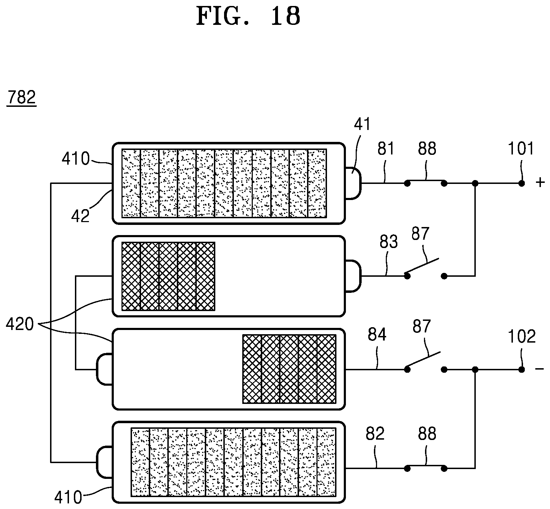

FIG. 18 is a schematic diagram illustrating a second discharge control state 782 according to some embodiments.

Referring to FIGS. 8, 9, 16, and 18, the battery module assembly 1 may have the second discharge control state 782. If the second group of battery modules 420 according to some embodiments are mounted on the battery module assembly 1, an SOC of the first group of battery modules 410 and an SOC of the second group of battery modules 420 may be different from each other. The second discharge control state 782 may be a state in which if the battery management unit 7 controls discharging between the first group of battery modules 410 and the second group of battery modules 420, an SOC value of the first group of battery modules 410 is greater than an SOC value of the second group of battery modules 420. The battery management unit 7 may short the first control circuit 81 and the fourth control circuit 84 and open the second control circuit 82 and the third control circuit 83 in the second discharge control state 782. In the second discharge control state 782, the second control circuit 82 and the third control circuit 83 may be in the open state 87, and the first control circuit 81 and the fourth control circuit 84 may be in the short state 88. The battery management unit 7 may discharge electrical energy from the first group of battery modules 410 without discharging the second group of battery modules 420 in the second discharge control state 782.

However, the method, performed by the battery management unit 7, controlling discharging of the plurality of battery modules 4 described above is not limited to the above description. For example, the battery management unit 7 may control charging and discharging of a plurality of batteries based on internal temperature information of each of the plurality of battery modules 4.

The battery module assembly according to some embodiments provides a structure capable of easily detaching a second group of battery modules, and thus, a user may select a balance between a capacity and weight of a battery.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery module assembly (1) mounted on a frame (2) and electrically connected to an external device through first and second output terminals (101, 102), the battery module assembly (1) comprising:
a plurality of battery modules (4) mounted on a lower portion of the frame (2), each of the plurality of battery modules (4) extending in a first direction (x), which is a longitudinal direction, and being arranged in a second direction (y) crossing the first direction (x); and
a control circuit (81, 82, 83, 84) configured to control an electrical connection between each of the plurality of battery modules (4) and each of the first and second output terminals (101, 102),
wherein the plurality of battery modules (4) comprise:
a first group of battery modules (410) mounted on the lower portion of the frame (2) and electrically connected to each other; and
a second group of battery modules (420) separably mounted on the lower portion of the frame (2) and electrically connected to each other,
the second group of battery modules (420) are connected in parallel to the first group of battery modules (410), and
are detachable from the frame (2) in a third direction (z) perpendicular to the first direction (x) and the second direction (y);
wherein the second group of battery modules (420) are mounted on the frame (2) so as to be independently separated from the first group of battery modules (410) such that the first group of battery modules (410) can remain mounted on the frame (2) when the second group of battery modules (420) are detached from the frame (2), with power supplied to the outside by the battery module assembly (1) being maintained by the first group of battery modules (410) even during detachment of the second group of battery modules (420).

2. The battery module assembly (1) as claimed in claim 1, wherein the control circuit (81, 82, 83, 84) comprises:
a first control circuit (81) configured to electrically control a connection between a positive terminal of the first group of battery modules (410) and a first output terminal (101);
a second control circuit (82) configured to electrically control a connection between a negative terminal of the first group of battery modules (410) and a second output terminal (102);
a third control circuit (83) configured to electrically control a connection between a positive terminal of the second group of battery modules (420) and the first output terminal (101); and
a fourth control circuit (84) configured to electrically control a connection between a negative terminal of the second group of battery modules (420) and the second output terminal (102).

3. The battery module assembly (1) as claimed in any one of the preceding claims, wherein the plurality of battery modules (4) are arranged symmetrically with respect to the first longitudinal direction within the frame (2).

4. The battery module assembly (1) as claimed in any one of the preceding claims, wherein
the second group of battery modules (420) are at a central position in the lower portion of the frame (2), and
the first group of battery modules (410) are spaced apart from each other by a certain distance in the second direction (y) at an edge position in the lower portion of the frame (2) with the second group of battery modules (420) located therebetween.

5. The battery module assembly (1) as claimed in any one of the preceding claims, when dependent upon claim 2, further comprising: a bus bar electrically connected to a positive terminal or a negative terminal of each of the plurality of battery modules (4),
wherein the bus bar includes first to fourth bus bars,
the first bus bar is electrically connected to the first control circuit,
the second bus bar is electrically connected to the second control circuit,
the third bus bar is electrically connected to the third control circuit, and
the fourth bus bar is electrically connected to the fourth control circuit.

6. The battery module assembly (1) as claimed in claim 5, wherein
one of the positive terminal and the negative terminal of each of the plurality of battery modules (4) is at one end of the frame (2) in a front direction in the first longitudinal direction in each of the plurality of battery modules (4), and
the other one of the positive terminal and the negative terminal is at the other end of the frame (2) in a rear direction in the first longitudinal direction in each of the plurality of battery modules (4).

7. The battery module assembly (1) as claimed in claim 6, wherein
terminals at one end of the frame (2) in the front direction in each of the plurality of battery modules (4) are arranged side by side in the second direction (y),
terminals at the other end of the frame (2) in the rear direction in each of the plurality of battery modules (4) are arranged side by side in the second direction (y),
the bus bar includes fifth and sixth bus bars,
the fifth bus bar is configured to electrically connect the positive terminal and the negative terminal of the first group of battery modules (410) among the terminals at the other end of the frame (2) in the rear direction, and
the sixth bus bar is configured to electrically connect the positive terminal to the negative terminal of the second group of battery modules (420) among the terminals at the other end of the frame (2) in the rear direction.

8. The battery module assembly (1) as claimed in any one of the preceding claims, when dependent upon claim 2, further comprising: a battery management unit on the frame (2) and configured to selectively open and close the first to fourth control circuits according to a state of charge (SOC) of each of the first group of battery modules (410) and the second group of battery modules (420).

9. The battery module assembly (1) as claimed in claim 8, wherein the battery management unit has
a charge control state if the first output terminal (101) and the second output terminal (102) each supply electrical energy to at least one of the plurality of battery modules (4), and
has a discharge control state if at least one of the plurality of battery modules (4) supplies electrical energy to outside through the first output terminal (101) and the second output terminal (102).

10. The battery module assembly (1) as claimed in claim 9, wherein, in the charge control state, the battery management unit is configured to:
open the first control circuit (81) and the second control circuit (82) and short the third control circuit (83) and the fourth control circuit (84) if the SOC of the first group of battery modules (410) is greater than the SOC of the second group of battery modules (420); and
open the third control circuit (83) and the fourth control circuit (84) and short the first control circuit (81) and the second control circuit (82) if the SOC of the second group of battery modules (420) is greater than the SOC of the first group of battery modules (410).

11. The battery module assembly (1) as claimed in claim 9 or claim 10, wherein, in the discharge control state, the battery management unit is configured to:
open the first control circuit (81) and the second control circuit (82) and short the third control circuit (83) and the fourth control circuit (84) if the SOC of the first group of battery modules (410) is greater than the SOC of the second group of battery modules (420); and
open the third control circuit (83) and the fourth control circuit (84) and short the first control circuit (81) and the second control circuit (82) if the SOC of the second group of battery modules (420) is greater than the SOC of the first group of battery modules (410).

12. The battery module assembly (1) as claimed in any one of claims 9 to 12, wherein the battery management unit is configured to open and close the first to fourth control circuits (81, 82, 83, 84) by wirelessly communicating with the first group of battery modules (410) and the second group of battery modules (420).

13. The battery module assembly (1) of any one of the preceding claims, wherein the battery module (4) comprises a fastening flange (461) to fix the battery module (4) to the lower portion of the frame (2).

14. The battery module assembly (1) of claim 13, wherein the battery module assembly (1) further comprises a fixing member (48) fixing the battery module (4) to the frame (2), the fixing member (48) being inserted into an insertion hole (4610) of the fastening flange (461), the fixing member (48) being fastened in a direction from the lower portion to an upper portion of the frame (2).

15. The battery module assembly of claim 13 or claim14, comprising fastening flanges (461) on both sides of the battery module (4) in the second direction (y).

## Patentansprüche

1. Batteriemodul-Baugruppe (1), die an einem Rahmen (2) angebracht und über erste und zweite Ausgangsanschlüsse (101, 102) mit einer externer Vorrichtung elektrisch verbunden ist, wobei die Batteriemodul-Baugruppe (1) umfasst:
eine Vielzahl von Batteriemodulen (4), die an einem unteren Abschnitt des Rahmens (2) angebracht sind, wobei jedes der Batteriemodule (4) sich in einer ersten Richtung (x), die eine Längsrichtung ist, erstreckt und in einer zweiten Richtung (y), welche die erste Richtung (x) schneidet, angeordnet ist; und
eine Steuerungsschaltung (81, 82, 83, 84), die dafür konfiguriert ist, eine elektrische Verbindung zwischen jedem der Vielzahl von Batteriemodulen (4) und jedem der ersten und zweiten Ausgangsanschlüsse (101, 102) zu steuern,
wobei die Vielzahl von Batteriemodulen (4) umfasst:
eine erste Gruppe von Batteriemodulen (410), die am unteren Abschnitt des Rahmens (2) angebracht und elektrisch miteinander verbunden sind; und
eine zweite Gruppe von Batteriemodulen (420), die separat am unteren Abschnitt des Rahmens (2) angebracht und elektrisch miteinander verbunden sind,
wobei die zweite Gruppe von Batteriemodulen (420) zur ersten Gruppe von Batteriemodulen (410) parallelgeschaltet ist, und
in einer dritten Richtung (z), die senkrecht zur ersten Richtung (x) und zur zweiten Richtung (y) ist, vom Rahmen (2) abnehmbar ist;
wobei die zweite Gruppe von Batteriemodulen (420) so am Rahmen (2) angebracht ist, dass sie unabhängig von der ersten Gruppe von Batteriemodulen (410) getrennt werden kann, sodass die erste Gruppe von Batteriemodulen (410) am Rahmen (2) angebracht bleiben kann, wenn die zweite Gruppe von Batteriemodulen (420) vom Rahmen (2) abgenommen wird, wobei ein durch die Batteriemodul-Baugruppe (1) nach außen zugeführte Stromversorgung durch die erste Gruppe von Batteriemodulen (410) sogar während der Abtrennung der zweiten Gruppe von Batteriemodulen (420) aufrechterhalten wird.

2. Batteriemodul-Baugruppe (1) nach Anspruch 1, wobei die Steuerungsschaltung (81, 82, 83, 84) umfasst:
eine erste Steuerungsschaltung (81), die dafür konfiguriert ist, eine Verbindung zwischen einem Pluspol der ersten Gruppe von Batteriemodulen (410) und einem ersten Ausgangsanschluss (101) elektrisch zu steuern;
eine zweite Steuerungsschaltung (82), die dafür konfiguriert ist, eine Verbindung zwischen einem Minuspol der ersten Gruppe von Batteriemodulen (410) und einem zweiten Ausgangsanschluss (102) elektrisch zu steuern;
eine dritte Steuerungsschaltung (83), die dafür konfiguriert ist, eine Verbindung zwischen einem Pluspol der zweiten Gruppe von Batteriemodulen (420) und dem ersten Ausgangsanschluss (101) elektrisch zu steuern; und
eine vierte Steuerungsschaltung (84), die dafür konfiguriert ist, eine Verbindung zwischen einem Minuspol der zweiten Gruppe von Batteriemodulen (420) und dem zweiten Ausgangsanschluss (102) elektrisch zu steuern.

3. Batteriemodul-Baugruppe (1) nach einem der vorstehenden Ansprüche, wobei die Vielzahl von Batteriemodulen (4) in Bezug auf die erste Längsrichtung innerhalb des Rahmens (2) symmetrisch angeordnet ist.

4. Batteriemodul-Baugruppe (1) nach einem der vorstehenden Ansprüche, wobei
die zweite Gruppe von Batteriemodulen (420) sich in zentraler Position im unteren Abschnitt des Rahmens (2) befindet, und
die erste Gruppe von Batteriemodulen (410) um einen bestimmten Abstand in der zweiten Richtung (y) an einer Randposition im unteren Bereich des Rahmens (2) voneinander beabstandet ist, wobei die zweite Gruppe von Batteriemodulen (420) dazwischen angeordnet ist.

5. Batteriemodul-Baugruppe (1) nach einem der vorstehenden Ansprüche, abhängig von Anspruch 2, weiter umfassend: eine Sammelschiene, die mit einem Pluspol oder einem Minuspol eines jeden der Vielzahl von Batteriemodulen (4) elektrisch verbunden ist.
wobei die Sammelschiene erste bis vierte Sammelschienen einschließt,
die erste Sammelschiene mit der ersten Steuerungsschaltung elektrisch verbunden ist,
die zweite Sammelschiene mit der zweiten Steuerungsschaltung elektrisch verbunden ist,
die dritte Sammelschiene mit der dritten Steuerungsschaltung elektrisch verbunden ist, und
die vierte Sammelschiene mit der vierten Steuerungsschaltung elektrisch verbunden ist.

6. Batteriemodul-Baugruppe (1) nach Anspruch 5, wobei
einer des Pluspols und des Minuspols eines jeden der Vielzahl von Batteriemodulen (4) sich an einem Ende des Rahmens (2) in einer Richtung nach vorn in der ersten Längsrichtung in jedem der Vielzahl von Batteriemodulen (4) befindet, und
der andere des Pluspols und des Minuspols sich am anderen Ende des Rahmens (2) in einer Richtung nach hinten in der ersten Längsrichtung in jedem der Vielzahl von Batteriemodulen (4) befindet.

7. Batteriemodul-Baugruppe (1) nach Anspruch 6, wobei
Anschlüsse an einem Ende des Rahmens (2) in der Richtung nach vorn in jedem der Vielzahl von Batteriemodulen (4) in der zweiten Richtung (y) nebeneinander angeordnet sind,
Anschlüsse am anderen Ende des Rahmens (2) in der Richtung nach hinten in jedem der Vielzahl von Batteriemodulen (4) in der zweiten Richtung (y) nebeneinander angeordnet sind,
die Sammelschiene fünfte und sechste Sammelschienen einschließt,
die fünfte Sammelschiene dafür konfiguriert ist, den Pluspol und den Minuspol der ersten Gruppe von Batteriemodulen (410) zwischen den Anschlüssen am anderen Ende des Rahmens (2) in der Richtung nach hinten elektrisch zu verbinden, und
die sechste Sammelschiene dafür konfiguriert ist, den Pluspol mit dem Minuspol der zweiten Gruppe von Batteriemodulen (420) zwischen den Anschlüssen am anderen Ende des Rahmens (2) in der Richtung nach hinten elektrisch zu verbinden.

8. Batteriemodul-Baugruppe (1) nach einem der vorstehenden Ansprüche, wenn abhängig von Anspruch 2, weiter eine Batteriemanagementeinheit am Rahmen (2) umfassend und dafür konfiguriert, die erste bis vierte Steuerungsschaltung gemäß einem Ladezustand (SOC) einer jeden der ersten Gruppe von Batteriemodulen (410) und der zweiten Gruppe von Batteriemodulen (420) selektiv zu öffnen und zu schließen.

9. Batteriemodul-Baugruppe (1) nach Anspruch 8, wobei die Batteriemanagementeinheit aufweist:
einen Lade-Steuerungszustand, wenn der erste Ausgangsanschluss (101) und der zweite Ausgangsanschluss (102) jeweils mindestens einem der Vielzahl von Batteriemodulen (4) elektrische Energie zuführen, und
einen Entlade-Steuerungszustand, wenn mindestens eines der Vielzahl von Batteriemodulen (4) über den ersten Ausgangsanschluss (101) und den zweiten Ausgangsanschluss (102) elektrische Energie nach außen abgibt.

10. Batteriemodul-Baugruppe (1) nach Anspruch 9, wobei die Batteriemanagementeinheit im Lade-Steuerungszustand dafür konfiguriert ist:
die erste Steuerungsschaltung (81) und die zweite Steuerungsschaltung (82) zu öffnen und die dritte Steuerungsschaltung (83) und die vierte Steuerungsschaltung (84) kurzzuschließen, wenn der SOC der ersten Gruppe von Batteriemodulen (410) größer als der SOC der zweiten Gruppe von Batteriemodulen (420) ist; und
die dritte Steuerungsschaltung (83) und die vierte Steuerungsschaltung (84) zu öffnen und die erste Steuerungsschaltung (81) und die zweiten Steuerungsschaltung (82) kurzzuschließen, wenn der SOC der zweiten Gruppe von Batteriemodulen (420) größer als der SOC der ersten Gruppe von Batteriemodulen (410) ist.

11. Batteriemodul-Baugruppe (1) nach Anspruch 9 oder Anspruch 10, wobei die Batteriemanagementeinheit im Entlade-Steuerungszustand dafür konfiguriert ist:
die erste Steuerungsschaltung (81) und die zweite Steuerungsschaltung (82) zu öffnen und die dritte Steuerungsschaltung (83) und die vierte Steuerungsschaltung (84) kurzzuschließen, wenn der SOC der ersten Gruppe von Batteriemodulen (410) größer als der SOC der zweiten Gruppe von Batteriemodulen (420) ist; und
die dritte Steuerungsschaltung (83) und die vierte Steuerungsschaltung (84) zu öffnen und die erste Steuerungsschaltung (81) und die zweite Steuerungsschaltung (82) kurzzuschließen, wenn der SOC der zweiten Gruppe von Batteriemodulen (420) größer als der SOC der ersten Gruppe von Batteriemodulen (410) ist.

12. Batteriemodul-Baugruppe (1) nach einem der Ansprüche 9 bis 12, wobei die Batteriemanagementeinheit dafür konfiguriert ist, die ersten bis vierten Steuerungsschaltungen (81, 82, 83, 84) durch drahtloses Kommunizieren mit der ersten Gruppe von Batteriemodulen (410) und der zweiten Gruppe von Batteriemodulen (420) zu öffnen und zu schließen.

13. Batteriemodul-Baugruppe (1) nach einem der vorstehenden Ansprüche, wobei das Batteriemodul (4) einen Befestigungsflansch (461) umfasst, um das Batteriemodul (4) am unteren Abschnitt des Rahmens (2) zu befestigen.

14. Batteriemodul-Baugruppe (1) nach Anspruch 13, wobei die Batteriemodul-Baugruppe (1) weiter ein Befestigungselement (48) umfasst, welches das Batteriemodul (4) am Rahmen (2) befestigt, wobei das Befestigungselement (48) in ein Einführungsloch (4610) des Befestigungsflanschs (461) eingeführt wird, wobei das Befestigungselement (48) in einer Richtung vom unteren Abschnitt zu einem oberen Abschnitt des Rahmens (2) befestigt wird.

15. Batteriemodul-Baugruppe nach Anspruch 13 oder 14, umfassend Befestigungsflansche (461) auf beiden Seiten des Batteriemoduls (4) in der zweiten Richtung (y).

## Revendications

1. Ensemble module de batterie (1) monté sur un cadre (2) et raccordé électriquement à un dispositif externe au moyen de première et seconde bornes de sortie (101, 102), l'ensemble module de batterie (1) comprenant :
une pluralité de modules de batterie (4) montés sur une partie inférieure du cadre (2), chaque module de batterie de la pluralité de modules de batterie (4) s'étendant dans une première direction (x), qui est une direction longitudinale, et étant agencé dans une deuxième direction (y) croisant la première direction (x) ; et
un circuit de commande (81, 82, 83, 84) configuré pour commander un raccordement électrique entre chaque module de batterie de la pluralité de modules de batterie (4) et chacune des première et seconde bornes de sortie (101, 102),
dans lequel la pluralité de modules de batterie (4) comprend :
un premier groupe de modules de batterie (410) montés sur la partie inférieure du cadre (2) et raccordés électriquement les uns aux autres ; et
un second groupe de modules de batterie (420) montés de manière séparable sur la partie inférieure du cadre (2) et raccordés électriquement les uns aux autres,
le second groupe de modules de batterie (420) est raccordé en parallèle au premier groupe de modules de batterie (410), et
peut être détaché du cadre (2) dans une troisième direction (z) perpendiculaire à la première direction (x) et à la deuxième direction (y) ;
dans lequel le second groupe de modules de batterie (420) est monté sur le cadre (2) de manière à être séparé indépendamment du premier groupe de modules de batterie (410) de telle sorte que le premier groupe de modules de batterie (410) puisse rester monté sur le cadre (2) lorsque le second groupe de modules de batterie (420) est détaché du cadre (2), la puissance fournie à l'extérieur par l'ensemble modules de batterie (1) étant maintenue par le premier groupe de modules de batterie (410) même pendant le détachement du second groupe de modules de batterie (420).

2. Ensemble module de batterie (1) selon la revendication 1, dans lequel le circuit de commande (81, 82, 83, 84) comprend :
un premier circuit de commande (81) configuré pour commander électriquement un raccordement entre une borne positive du premier groupe de modules de batterie (410) et une première borne de sortie (101) ;
un deuxième circuit de commande (82) configuré pour commander électriquement un raccordement entre une borne négative du premier groupe de modules de batterie (410) et une seconde borne de sortie (102) ;
un troisième circuit de commande (83) configuré pour commander électriquement un raccordement entre une borne positive du second groupe de modules de batterie (420) et la première borne de sortie (101) ; et
un quatrième circuit de commande (84) configuré pour commander électriquement un raccordement entre une borne négative du second groupe de modules de batterie (420) et la seconde borne de sortie (102).

3. Ensemble module de batterie (1) selon l'une quelconque des revendications précédentes, dans lequel la pluralité de modules de batterie (4) sont agencés de manière symétrique par rapport à la première direction longitudinale à l'intérieur du cadre (2).

4. Ensemble module de batterie (1) selon l'une quelconque des revendications précédentes, dans lequel
le second groupe de modules de batterie (420) est situé en position centrale dans la partie inférieure du cadre (2), et
dans le premier groupe, les modules de batterie (410) sont espacés les uns des autres d'une certaine distance dans la deuxième direction (y) à une position de bord dans la partie inférieure du cadre (2), le second groupe de modules de batterie (420) étant situé entre ceux-ci.

5. Ensemble module de batterie (1) selon l'une quelconque des revendications précédentes, lorsqu'elle dépend de la revendication 2, comprenant en outre : une barre omnibus raccordée électriquement à une borne positive ou à une borne négative de chaque module de batterie de la pluralité de modules de batterie (4),
dans lequel la barre omnibus inclut de la première à la quatrième barre omnibus, la première barre omnibus est raccordée électriquement au premier circuit de commande,
la deuxième barre omnibus est raccordée électriquement au deuxième circuit de commande,
la troisième barre omnibus est raccordée électriquement au troisième circuit de commande, et
la quatrième barre omnibus est raccordée électriquement au quatrième circuit de commande.

6. Ensemble module de batterie (1) selon la revendication 5, dans lequel
l'une de la borne positive et de la borne négative de chaque module de batterie de la pluralité de modules de batterie (4) est située à une extrémité du cadre (2) dans une direction avant, dans la première direction longitudinale, dans chaque module de batterie de la pluralité de modules de batterie (4), et
l'autre de la borne positive et de la borne négative se trouve à l'autre extrémité du cadre (2) dans une direction arrière dans la première direction longitudinale dans chaque module de batterie de la pluralité de modules de batterie (4).

7. Ensemble module de batterie (1) selon la revendication 6,
dans lequel des bornes à une extrémité du cadre (2) dans la direction avant de chaque module de batterie de la pluralité de modules de batterie (4) sont agencées côte à côte dans la deuxième direction (y),
des bornes à l'autre extrémité du cadre (2) dans la direction arrière dans chaque module de batterie de la pluralité de modules de batterie (4) sont agencées côte à côte dans la deuxième direction (y),
la barre omnibus inclut des cinquième et sixième barres omnibus,
la cinquième barre omnibus est configurée pour raccorder électriquement la borne positive et la borne négative du premier groupe de modules de batterie (410) parmi les bornes à l'autre extrémité du cadre (2) dans la direction arrière, et
la sixième barre omnibus est configurée pour raccorder électriquement la borne positive à la borne négative du second groupe de modules de batterie (420) parmi les bornes à l'autre extrémité du cadre (2) dans la direction arrière.

8. Ensemble module de batterie (1) selon l'une quelconque des revendications précédentes, lorsqu'elle dépend de la revendication 2, comprenant en outre : une unité de gestion de batterie sur le cadre (2) et configurée pour ouvrir et fermer de manière sélective les premier à quatrième circuits de commande selon un état de charge (SOC) de chaque module de batterie du premier groupe de modules de batterie (410) et du second groupe de modules de batterie (420).

9. Ensemble module de batterie (1) selon la revendication 8, dans lequel l'unité de gestion de batterie présente
un état de commande de charge si la première borne de sortie (101) et la seconde borne de sortie (102) fournissent chacune de l'énergie électrique à au moins un module de batterie de la pluralité de modules de batterie (4), et
présente un état de commande de décharge si au moins un module de batterie de la pluralité de modules de batterie (4) fournit de l'énergie électrique à l'extérieur au moyen de la première borne de sortie (101) et de la seconde borne de sortie (102).

10. Ensemble module de batterie (1) selon la revendication 9, dans lequel, dans l'état de commande de charge, l'unité de gestion de batterie est configurée pour :
ouvrir le premier circuit de commande (81) et le deuxième circuit de commande (82) et court-circuiter le troisième circuit de commande (83) et le quatrième circuit de commande (84) si l'état de charge (SOC) du premier groupe de modules de batterie (410) est plus important que l'état de charge (SOC) du second groupe de modules de batterie (420) ; et
ouvrir le troisième circuit de commande (83) et le quatrième circuit de commande (84) et court-circuiter le premier circuit de commande (81) et le deuxième circuit de commande (82) si le SOC du second groupe de modules de batterie (420) est plus important que le SOC du premier groupe de modules de batterie (410).

11. Ensemble module de batterie (1) selon la revendication 9 ou la revendication 10, dans lequel, dans l'état de commande de décharge, l'unité de gestion de batterie est configurée pour :
ouvrir le premier circuit de commande (81) et le deuxième circuit de commande (82) et court-circuiter le troisième circuit de commande (83) et le quatrième circuit de commande (84) si l'état de charge (SOC) du premier groupe de modules de batterie (410) est plus important que l'état de charge (SOC) du second groupe de modules de batterie (420) ; et
ouvrir le troisième circuit de commande (83) et le quatrième circuit de commande (84) et court-circuiter le premier circuit de commande (81) et le deuxième circuit de commande (82) si le SOC du second groupe de modules de batterie (420) est plus important que le SOC du premier groupe de modules de batterie (410).

12. Ensemble module de batterie (1) selon l'une quelconque des revendications 9 à 12, dans lequel l'unité de gestion de batterie est configurée pour ouvrir et fermer les premier à quatrième circuits de commande (81, 82, 83, 84) en communiquant sans fil avec le premier groupe de modules de batterie (410) et le second groupe de modules de batterie (420).

13. Ensemble module de batterie (1) selon l'une quelconque des revendications précédentes, dans lequel le module de batterie (4) comprend une bride de fixation (461) pour fixer le module de batterie (4) à la partie inférieure du cadre (2).

14. Ensemble module de batterie (1) de la revendication 13, dans lequel l'ensemble module de batterie (1) comprend en outre un élément de fixation (48) fixant le module de batterie (4) au cadre (2), l'élément de fixation (48) étant inséré dans un trou d'insertion (4610) de la bride de fixation (461), l'élément de fixation (48) étant fixé dans une direction allant de la partie inférieure à une partie supérieure du cadre (2).

15. Ensemble module de batterie selon la revendication 13 ou la revendication 14, comprenant des brides de fixation (461) des deux côtés du module de batterie (4) dans la deuxième direction (y).
